# EUROPEAN PATENT APPLICATION

(11) **EP 2 547 099 A1**
(43) Date of publication of application: **16.01.2013**
(21) Application number: 10847365.3
(22) Date of filing: 25.10.2010
(51) Int. Cl.: H04N 5/66, G09G 5/00, G09G 5/377

(54) **IMAGE PROCESSING SYSTEM**

(30) Priority: 10.03.2010 JP 2010053278
(71) Applicant: Panasonic Corporation, Kadoma-shi Osaka 571-8501 (JP)
(72) Inventor: DOI, Masakazu, Osaka -shi, Osaka 540-6207 (JP); IKEDA, Tadanori, Osaka -shi, Osaka 540-6207 (JP)
(74) Representative: Grünecker, Kinkeldey, Stockmair & Schwanhäusser
(86) International application number: PCT/JP2010/006303
(87) International publication number: WO 2011/111132

(57) **Abstract**

A first waveform generator (14) performs waveform generation based on the result of comparison of an analog FB signal (switching signal) with a first reference potential by a first comparator (12). A second waveform generator (18) performs waveform generation based on the result of comparison of the analog FB signal with a second reference potential by a second comparator (16). The outputs of the first and second waveform generators (14, 18) are input to an averaging unit (19), whereby the slope of a waveform of the switching signal is reflected on the output of the averaging unit (19). As a result, a process of gradually changing a border between a main image and a sub-image can be performed, whereby a disturbance can be reduced or eliminated at the border. Moreover, the circuit size can be reduced.

## Description

### TECHNICAL FIELD

The present invention relates to digital processing of a fast blanking signal at a SCART connector.

### BACKGROUND ART

In Europe etc., video apparatuses including a SCART connector are widespread. The SCART connector includes signal lines for a composite video signal (hereinafter referred to as a CVBS signal), three analog color component signals (hereinafter referred to as R, G, and B signals), and a fast blanking signal (hereinafter referred to as an FB signal).

One of the features of the SCART standard is that a blend of the CVBS signal (this image signal is hereinafter assumed to be used for a main image) and the R, G, and B signals (these image signals are hereinafter assumed to be used for a sub-image) can be output. For this blend ratio, the coefficient of each image is determined based on the value (an alpha value between 0 and 1) of the FB signal. When the combination of the coefficients of the images is 0 or 1, only one of the images is selected. When this either-or selection is switched during an effective video period, it is possible to mean the switching of the images on the same screen, i.e., an on-screen display (OSD) output can be performed.

Conventionally, in order to handle the five signals (i.e., the CVBS signal, the R, G, and B signals, and the FB signal), AD conversion is performed using a 5-channel analog-to-digital (AD) conversion circuit.

If the 5-channel AD conversion circuit is used to implement a signal processing system for SCART signals into an LSI device, the AD conversion circuit occupies a large area in the image processing system.

In recent years, in order to address that problem, digital signal processing have, in many cases, been performed on a signal input via the SCART connector (hereinafter referred to as a SCART signal).

For example, as described in Patent Document 1, binary AD conversion is performed on an input FB signal before digital signal processing is performed, whereby the circuit area is reduced. However, in Patent Document 1, a predetermined slope of the FB signal is invariably generated according to the operational specifications. Therefore, a slope which is intended in a video content may not be able to be generated, and it may be difficult to output an image which is intended by a set designer.

### CITATION LIST

### PATENT DOCUMENT

PATENT DOCUMENT 1: United States Patent Publication No. 2008/0062321 (Figure 5)

### SUMMARY OF THE INVENTION

### TECHNICAL PROBLEM

Conventionally, a change point in the FB signal is captured at a level having hysteresis, and a rising waveform (internal signal) having a predetermined shape is generated with reference to the change point. Therefore, the rising characteristics of the FB signal are not reflected on the internal signal. Therefore, the border between the two images may be disturbed.

Also, conventionally, a change point in the FB signal is captured at a single level, and therefore, by sampling the FB signal at a sampling frequency which is 16 times as high as the sampling frequency of the AD conversion circuit for the CVBS signal and the RGB signal, the timing difference from the border between the two images is reduced. Therefore, a circuit for generating the 16-fold frequency is required, and the power consumption is large.

Moreover, if the potential of the FB signal is intermediate between the CVBS selection potential and the RGB selection potential, the internal signal does not have a value indicating the intermediate potential.

### SOLUTION TO THE PROBLEM

An image processing system according to the present invention includes an input unit configured to input a switching signal for switching a main image and a sub-image, a first comparator configured to compare the switching signal with a first reference potential and output a result of the comparison, a second comparator configured to compare the switching signal with a second reference potential and output a result of the comparison, a first waveform generator configured to output a digital rising or falling waveform based on the output of the first comparator, a second waveform generator configured to output a digital rising or falling waveform based on the output of the second comparator, and an averaging unit configured to output an average value of the outputs of the first and second waveform generators.

With this configuration, the result of comparison of the switching signal with the first reference potential and the result of comparison of the switching signal with the second reference potential are used, and therefore, slopes of rising and falling waveforms of the switching signal can be reflected on the output of the averaging unit. As a result, a process of gradually changing a border between the main image and the sub-image can be performed, whereby a disturbance can be reduced or eliminated at the border. Moreover, the waveform generator can be implemented using a simple circuit, leading to a reduction in the size of the entire circuit. Also, a sufficiently accurate waveform can be obtained without using a high sampling frequency. Also, the intermediate potential can be controlled, whereby OSD output of a transparent image can be performed.

The image processing system of the present invention further includes a first and a second slope coefficient setting unit configured to set slopes of the rising and falling waveforms of the first and second waveform generators, respectively. With this configuration, a slope close to the switching signal can be output from the averaging unit.

The image processing system of the present invention further includes a first and a second reference potential generator configured to set values of the first and second reference potentials, respectively.

Another image processing system according to the present invention includes an input unit configured to input a switching signal for switching a main image and a sub-image, a comparator configured to compare the switching signal with a reference potential and output a result of the comparison, a waveform generator configured to output a digital rising or falling waveform based on the output of the comparator, and a slope coefficient setting unit configured to set slopes of the rising and falling waveforms of the waveform generator.

With this configuration, a process of gradually changing a border between the main image and the sub-image can be performed, whereby a disturbance can be reduced or eliminated at the border.

The image processing system of the present invention further includes a reference potential generator configured to set a value of the reference potential.

### ADVANTAGES OF THE INVENTION

According to the present invention, a process of gradually changing a border between the main image and the sub-image can be performed, whereby a disturbance can be reduced or eliminated at the border. Moreover, the waveform generator can be implemented using a simple circuit, leading to a reduction in the size of the entire circuit.

### BRIEF DESCRIPTION OF THE DRAWINGS

FIG. 1 is a block diagram showing a configuration of an image processing system according to an embodiment of the present invention.
FIG. 2 is a block diagram showing a detailed configuration of an alpha response system of FIG. 1.
FIG. 3 is a block diagram showing a detailed configuration of a waveform generator of FIG. 2.
FIG. 4 is a waveform diagram showing operation of the alpha response system of FIG. 2 with respect to a rising waveform.
FIG. 5 is a waveform diagram showing operation of the alpha response system of FIG. 2 with respect to another rising waveform.
FIG. 6 is a waveform diagram showing operation of the alpha response system of FIG. 2 which is obtained when a slope of the waveform generator is changed.
FIG. 7 is a waveform diagram showing operation of the alpha response system of FIG. 2 which is obtained when the reference potential of a comparator is changed.
FIG. 8 is a waveform diagram showing operation of the alpha response system of FIG. 2 which is obtained when a waveform having intermediate information is input.
FIG. 9 is a waveform diagram showing operation of the alpha response system of FIG. 2 which is obtained when a slope of an input waveform is gradually changed.

### DESCRIPTION OF EMBODIMENTS

An embodiment of an image processing system according to the present invention will be described in detail hereinafter with reference to the accompanying drawings. Note that, in the embodiment, parts indicated by the same reference characters perform similar operation, and therefore, will not be redundantly described.

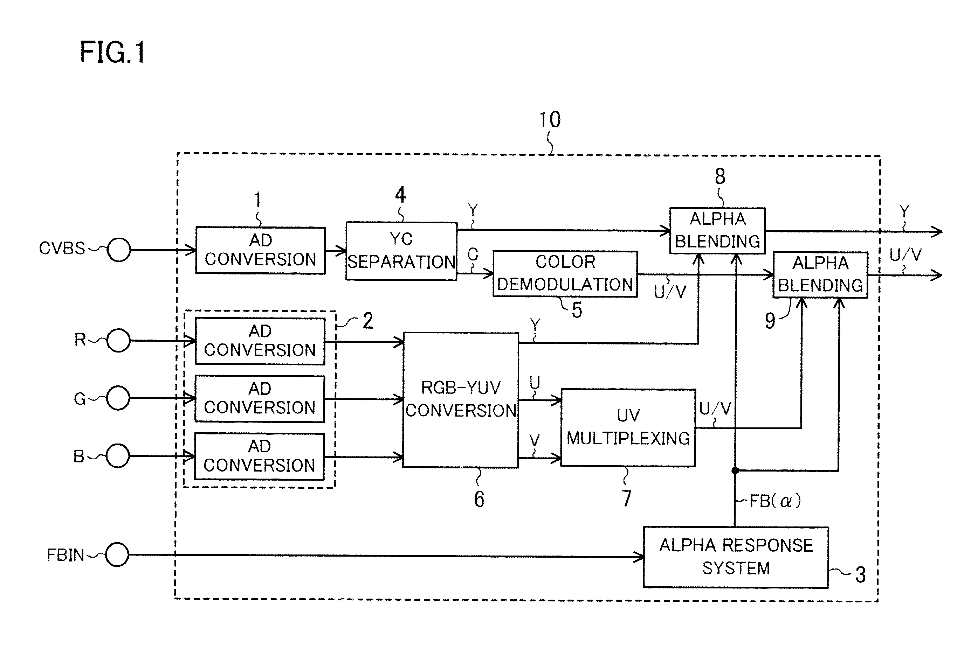

An image processing system 10 shown in FIG. 1 includes: a CVBS AD conversion circuit 1 which performs AD conversion on a CVBS signal; an RGB AD conversion circuit 2 which performs AD conversion on an RGB signal; an alpha response system (OSD contour correction system) 3 which receives an input FB signal (FBIN), a YC separation circuit 4 which separates the output of the CVBS AD conversion circuit 1 into a luminance Y signal and a color difference C signal; a color demodulation circuit 5 which performs color demodulation on the color difference C signal output by the YC separation circuit 4; an RGB-YUV conversion circuit 6 which converts the output signal of the RGB AD conversion circuit 2 into a YUV form; a UV multiplexing circuit 7 which performs time-division multiplexing on the UV signal of the RGB-YUV conversion circuit 6; a luminance alpha blending circuit 8 which performs blending calculation on the luminance Y signal of the YC separation circuit 4, the luminance Y signal of the RGB-YUV conversion circuit 6, and the output FB (α) signal of the alpha response system 3; and a color difference alpha blending circuit 9 which performs blending calculation on the output U/V signal of the color demodulation circuit 5, the output U/V signal of the UV multiplexing circuit 7, and the output FB (α) signal of the alpha response system 3.

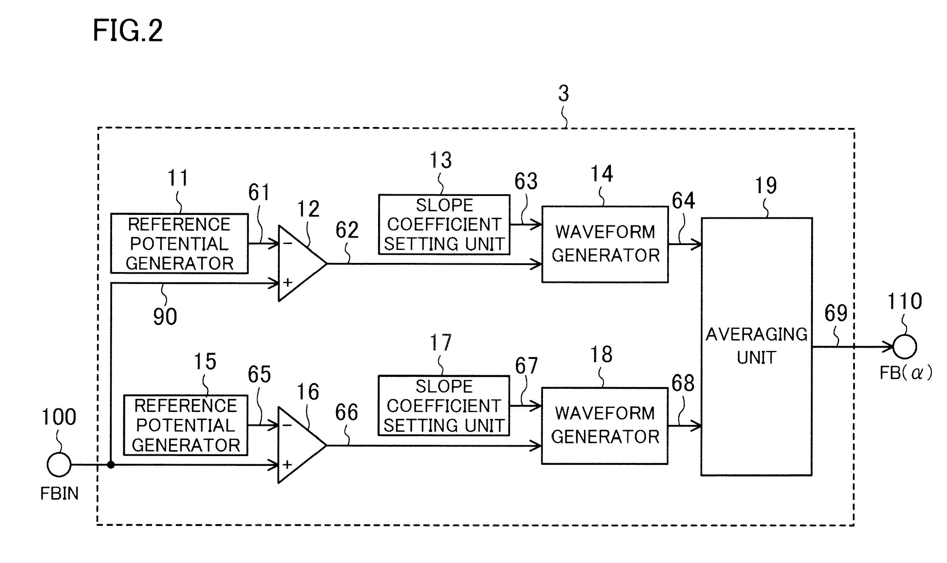

The alpha response system 3, shown in FIG. 2, is a system which outputs a digital waveform which mimics slew operation which is performed when the analog FB signal is input to the AD conversion circuit. The alpha response system 3 includes: an input terminal 100 through which the analog FB signal 90 is input; a first reference potential generator 11; a first comparator 12 which compares the output potential 61 of the first reference potential generator 11 with the potential of the analog FB signal 90 to output a 1-bit digital FB signal 62; a first slope coefficient setting unit 13; a first waveform generator 14 which performs bit extension on the 1-bit digital FB signal 62, and thereafter, outputs a multi-bit digital FB signal 64 based on a slope coefficient set value 63 of the first slope coefficient setting unit 13; a second reference potential generator 15; a second comparator 16 which compares the output potential 65 of the second reference potential generator 15 with the potential of the analog FB signal 90 to output a 1-bit digital FB signal 66; a second slope coefficient setting unit 17; a second waveform generator 18 which performs bit extension on the 1-bit digital FB signal 66, and thereafter, outputs a multi-bit digital FB signal 68 based on a slope coefficient set value 67 of the second slope coefficient setting unit 17; an averaging unit 19 which performs averaging on a multi-bit digital FB signal 64 of the first waveform generator 14 and a multi-bit digital FB signal 68 of the second waveform generator 18 to output a digital FB signal 69; and an output terminal 110 through which the digital FB signal 69 is output.

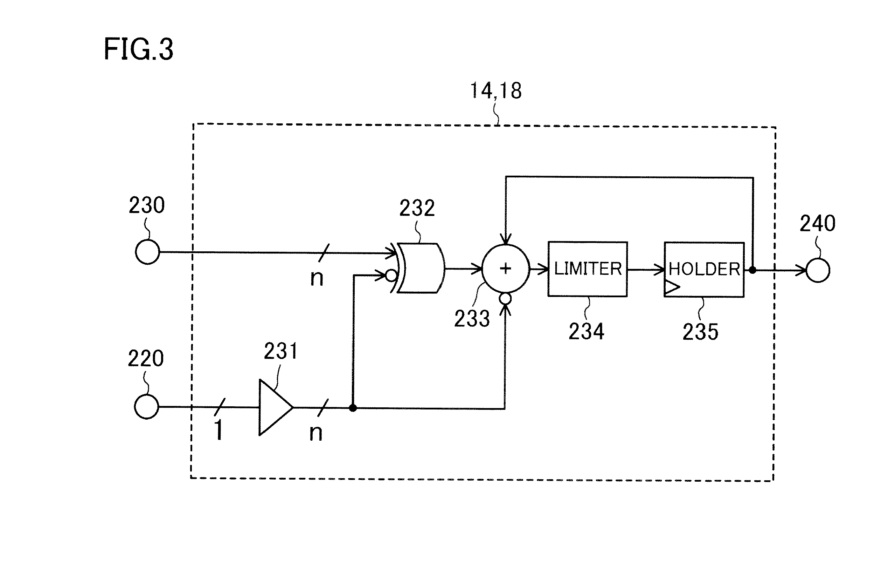

FIG. 3 shows a specific example of the first and second waveform generators 14 and 18 of FIG. 2. The waveform generators 14 and 18 each include: an input terminal 220 through which the 1-bit digital FB signal is input; an input terminal 230 through which a slope coefficient set value (n bits, where n is an integer of two or more) is input; a bit extender 231 which extends a 1-bit signal input through the input terminal 220 into multiple bits (n bits); a logic unit 232 which outputs an exclusive-OR of a signal from the input terminal 230 and an inversion of an output signal of the bit extender 231; an adder/subtractor 233 which adds and subtracts the outputs of the logic unit 232 and the bit extender 231 to and from the output value of a holder 235 in the two's complement form; a limiter 234 which limits the output value of the adder/subtractor 233 within a range; the holder 235 which holds the output value of the limiter 234; and an output terminal 240 through which the output value of the holder 235 is output.

In this embodiment, the first and second waveform generators 14 and 18 can each be implemented using only an integrating circuit including the adder/subtractor 233 which performs processing in the two's complement form, the limiter 234, and the holder 235 in addition to the slope coefficient set value and the bit extender 231 for the 1-bit digital FB signal, and therefore, have a smaller circuit size than that of Patent Document 1. Therefore, the first and second waveform generators 14 and 18 can be implemented using a simple circuit, leading to a reduction in the entire circuit size.

Operation of the image processing system 10 thus configured of the embodiment will be described hereinafter.

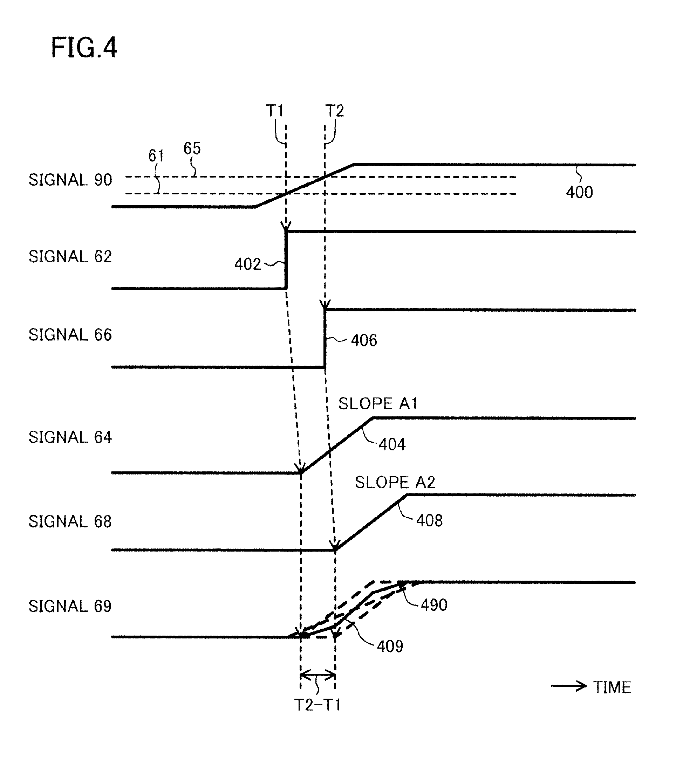

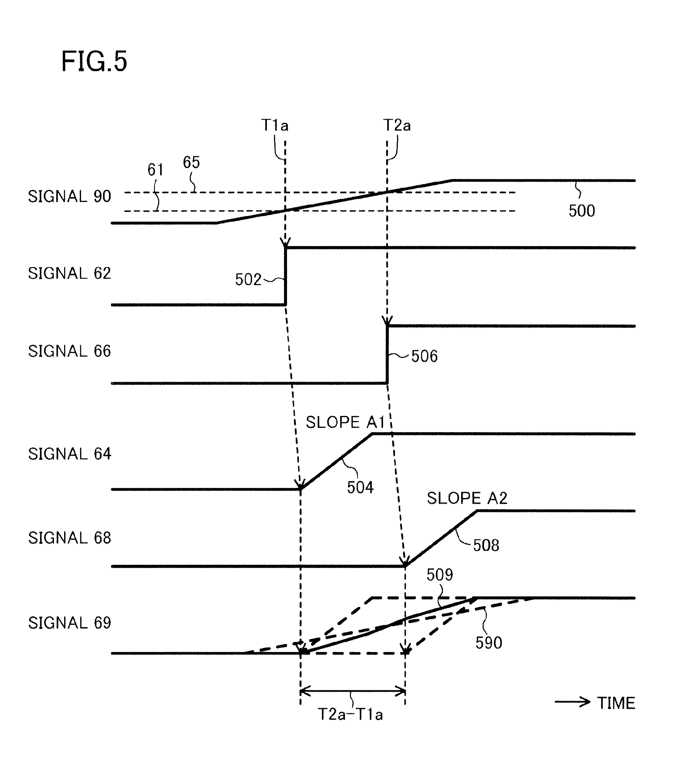

FIGS. 4 and 5 are diagrams showing internal signals having different input waveforms of the alpha response system 3.

If the analog FB signal 90 is input which has a rising waveform 400 shown in FIG. 4, the output signal 62 of the first comparator 12 transitions from low to high at time T1 as indicated by a waveform 402, based on the output potential 61 of the first reference potential generator 11. Similarly, the output signal 66 of the second comparator 16 transitions from low to high at time T2 as indicated by a waveform 406, based on the output potential 65 of the second reference potential generator 15. The first waveform generator 14 generates a sloped waveform (A1 in a waveform 404) in the output signal 64. Similarly, the second waveform generator 18 generates a sloped waveform (A2 in a waveform 408) in the output signal 68. The averaging unit 19 performs averaging on the output signals 64 and 68 to generate the output signal 69 having a waveform 409. On the other hand, waveform characteristics corresponding to characteristics of the input waveform are shown by a dashed-line waveform 490.

If the analog FB signal 90 is input which has a rising waveform 500 shown in FIG. 5, the output signal 62 of the first comparator 12 transitions from low to high at time T1a as indicated by a waveform 502, based on the output potential 61 of the first reference potential generator 11. Similarly, the output signal 66 of the second comparator 16 transitions from low to high at time T2a as indicated by a waveform 506, based on the output potential 65 of the second reference potential generator 15. The first waveform generator 14 generates a sloped waveform (A1 in a waveform 504) in the output signal 64. Similarly, the second waveform generator 18 generates a sloped waveform (A2 in a waveform 508) in the output signal 68. The averaging unit 19 performs averaging on the output signals 64 and 68 to generate the output signal 69 having a waveform 509. On the other hand, waveform characteristics corresponding to characteristics of the input waveform are shown by a dashed-line waveform 590.

As shown by the waveform diagrams of FIGS. 4 and 5, even if different waveforms are input, the alpha response system 3 of FIG. 2 can output waveforms close to the waveform characteristics of the input waveforms, i.e., the waveforms 490 and 590 having the characteristics of the input analog FB signal 90.

In this embodiment, compared to Patent Document 1, the alpha response system 3 of FIG. 2 provides the waveform characteristics of an output waveform which are not fixed to a uniform process and have reproducibility to some extent with respect to the input waveform characteristics. Therefore, a slope close to a switching signal can be output from the averaging unit 19.

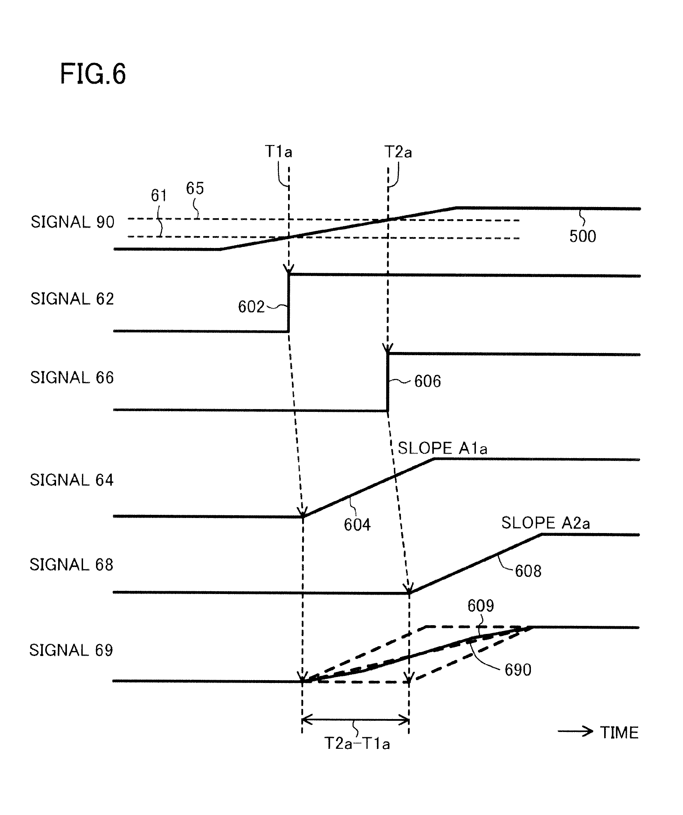

FIG. 6 is a waveform diagram which is obtained when the output signal 64 of the first waveform generator 14 and the output signal 68 of the second waveform generator 18 are changed to change slope characteristics, with respect to the input signal 500 of FIG. 5.

If the analog FB signal 90 is input which has a rising waveform 500 shown in FIG. 6, the output signal 62 of the first comparator 12 transitions from low to high at time T1a as indicated by a waveform 602, based on the output potential 61 of the first reference potential generator 11. Similarly, the output signal 66 of the second comparator 16 transitions from low to high at time T2a as indicated by a waveform 606, based on the output potential 65 of the second reference potential generator 15. The first waveform generator 14 generates a sloped waveform (A1a in a waveform 604) in the output signal 64. Similarly, the second waveform generator 18 generates a sloped waveform (A2a in a waveform 608) in the output signal 68. The averaging unit 19 performs averaging on the output signals 64 and 68 to generate the output signal 69 having a waveform 609. On the other hand, waveform characteristics corresponding to characteristics of the input waveform are shown by a dashed-line waveform 690.

In this embodiment, in the alpha response system 3 of FIG. 2, the slopes set in the slope coefficient setting units 13 and 17 are changed to A1a and A2a which are closer to the input waveform 500 than A1 and A2 of FIG. 5. Therefore, a slope close to a switching signal can be output from the averaging unit 19.

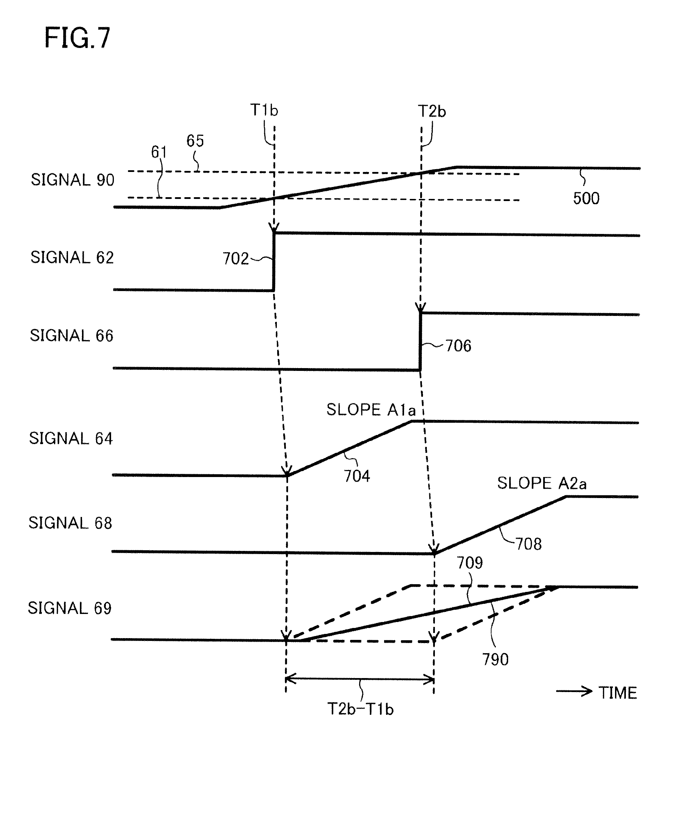

FIG. 7 is a waveform diagram which is obtained when the output potential 61 of the first reference potential generator 11 and the output potential 65 of the second reference potential generator 15 are changed to change the threshold, with respect to the input signal 500 of FIG. 6.

If the analog FB signal 90 is input which has a rising waveform 500 shown in FIG. 7, the output signal 62 of the first comparator 12 transitions from low to high at time T1b as indicated by a waveform 702, based on the output potential 61 of the first reference potential generator 11. Similarly, the output signal 66 of the second comparator 16 transitions from low to high at time T2b as indicated by a waveform 706, based on the output potential 65 of the second reference potential generator 15. The first waveform generator 14 generates a sloped waveform (A1a in a waveform 704) in the output signal 64. Similarly, the second waveform generator 18 generates a sloped waveform (A2a in a waveform 708) in the output signal 68. The averaging unit 19 performs averaging on the output signals 64 and 68 to generate the output signal 69 having a waveform 709. On the other hand, waveform characteristics corresponding to characteristics of the input waveform are shown by a dashed-line waveform 790.

As indicated by the waveform diagram of FIG. 7, when the reference potentials 61 and 65 are changed in the alpha response system 3, then if the waveform characteristics of the input waveform are changed as indicated by the signal waveforms 702 and 706, the output waveform of the averaging unit 19 is changed, and therefore, by setting an appropriate reference potential, the output waveform characteristics having a still higher resolution can be obtained for the input analog FB signal 90. Therefore, a slope close to the switching signal can be output from the averaging unit 19. Moreover, a process of gradually switching the border between the main image and the sub-image can be performed, whereby the disturbance of the border can be reduced or eliminated.

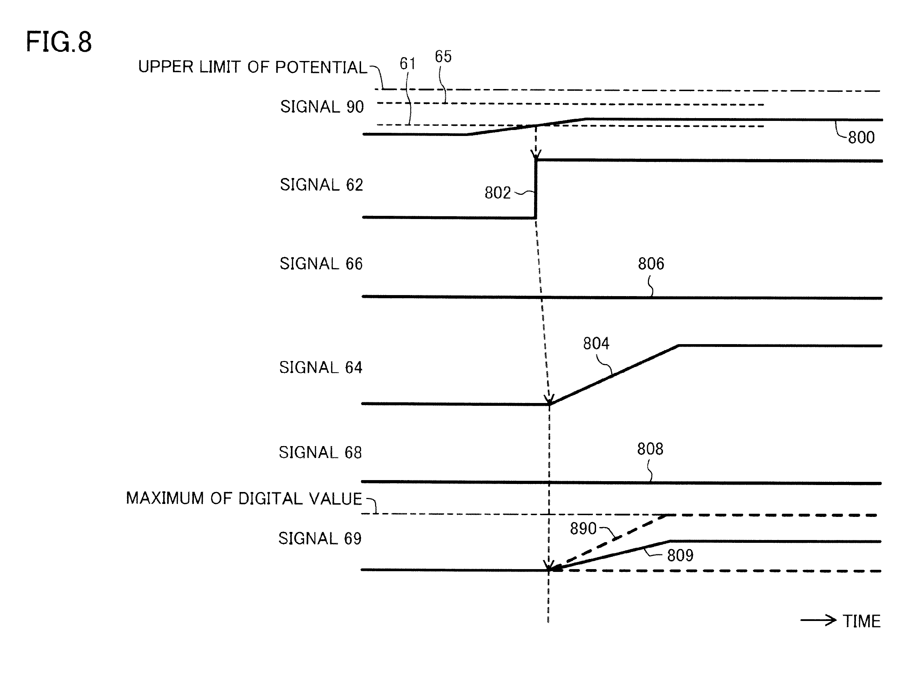

FIG. 8 is a waveform diagram which is obtained when the analog FB signal 90 having an intermediate level (not the high or low level) is input.

If the analog FB signal 90 is input which has a rising waveform 800 which does not reach the upper limit of the potential level as shown in FIG. 8, the output signal 62 of the first comparator 12 transitions from low to high at predetermined time as indicated by a waveform 802, based on the output potential 61 of the first reference potential generator 11. On the other hand, the output signal 66 of the second comparator 16 is fixed to the low level as indicated by a waveform 806, based on the output potential 65 of the second reference potential generator 15. The first waveform generator 14 generates a sloped waveform (A1 in a waveform 804) in the output signal 64. On the other hand, because the waveform 806 is fixed to the low level, the second waveform generator 18 generates the output signal 68 fixed to the low level as indicated by a waveform 808. In this case, the averaging unit 19 performs averaging on the output signals 64 and 68 to generate the output signal 69 having a waveform having an intermediate state which does not reach the maximum digital value as indicated by a waveform 809.

Thus, the alpha response system 3 of FIG. 2 can generate output waveform characteristics having intermediate information with respect to a waveform 890 indicating a signal response to the input the analog FB signal 90 having an intermediate state (not the high or low level).

In this embodiment, the alpha response system 3 of FIG. 2 can provide the waveform characteristics of an output waveform which are not fixed to the high or low level, and have intermediate information with respect to the input waveform characteristics, compared to Patent Document 1. Therefore, the intermediate potential can be controlled, whereby OSD output of a transparent image can be performed.

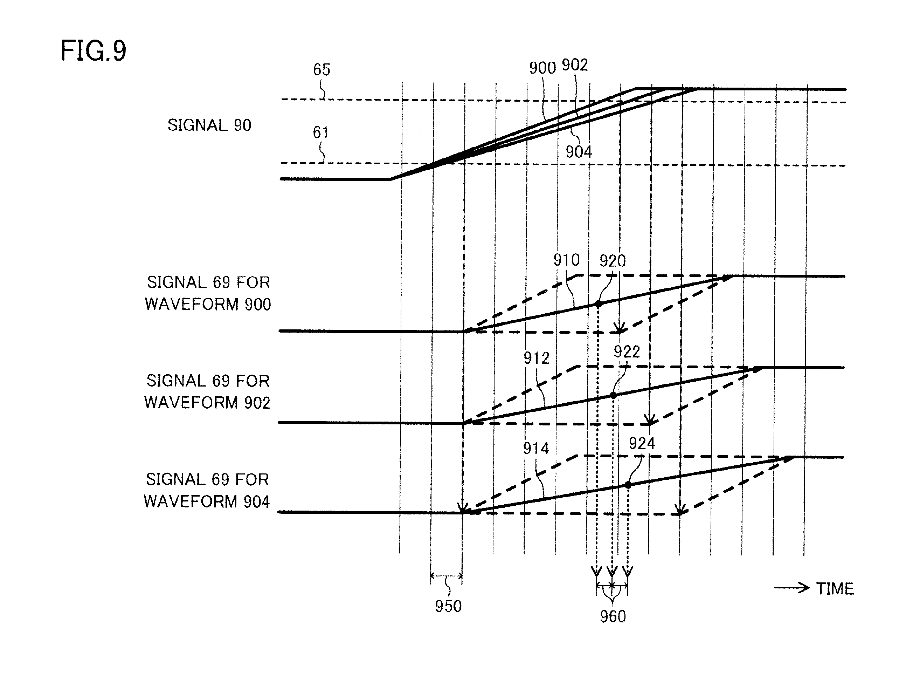

FIG. 9 is a waveform diagram which is obtained when the slope of an input waveform is gradually decreased. Transitions to the high potential of rising waveforms 900, 902, and 904 in FIG. 9 are shifted from each other by one cycle of the sampling clock for AD conversion. Note that FIG. 9 does not show changes over time in the digital value, and shows only transition timings.

If the analog FB signal 90 is input which has the rising waveforms 900, 902, and 904 of FIG. 9, the output signal 69 of the averaging unit 19 has signal waveforms 910, 912, and 914 with respect to the waveforms 900, 902, and 904, respectively.

The center times of the transit periods of these waveforms are indicated by points 920, 922, and 924. These time intervals are half of the sampling clock period. Specifically, in FIG. 9, a reference character 950 indicates the time width of the sampling rate, and a reference character 960 indicates a time width which is two times as high as the sampling rate.

In other words, the image processing system 10 of FIG. 1 updates data at the sampling clock, and the processing accuracy is two times as high as the sampling clock. Therefore, a sufficiently accurate waveform is obtained without using a high sampling frequency, and therefore, the power consumption can be reduced.

Note that the alpha response system 3 of the present invention is not limited to the above embodiment and may be any system that has a function of changing the slope. The first and second waveform generators 14 and 18 of the present invention are not limited to the above embodiment, and various changes and modifications can be made thereto without departing the scope of the present invention.

Although not mentioned in the above embodiment, the image processing system 10 of the present invention is a merely exemplary output image processing method. A delay may occur in processing time between the FB signal processed by the alpha response system 3 of this embodiment and the actual signal. A function of adjusting the delay in order to reduce or eliminate the delay may be implemented in the image processing system 10 without departing the scope of the present invention.

All or a part of the functions of the components of the alpha response system 3 of FIG. 2 may be implemented by software.

### INDUSTRIAL APPLICABILITY

As described above, the present invention is applicable to a device including a SCART terminal, particularly, a television, a video recorder, a game device, etc.

### DESCRIPTION OF REFERENCE CHARACTERS

- 1: CVBS AD CONVERSION CIRCUIT
- 2: RGB AD CONVERSION CIRCUIT
- 3: ALPHA RESPONSE SYSTEM
- 4: YC SEPARATION CIRCUIT
- 5: COLOR DEMODULATION CIRCUIT
- 6: RGB-YUV CONVERSION CIRCUIT
- 7: UV MULTIPLEXING CIRCUIT
- 8: LUMINANCE ALPHA BLENDING CIRCUIT
- 9: COLOR DIFFERENCE ALPHA BLENDING CIRCUIT
- 10: IMAGE PROCESSING SYSTEM
- 11, 15: REFERENCE POTENTIAL GENERATOR
- 12, 16: COMPARATOR
- 13, 17: SLOPE CONSTANT SETTING UNIT
- 14, 18: WAVEFORM GENERATOR
- 19: AVERAGING UNIT
- 100: INPUT TERMINAL OF ALPHA RESPONSE SYSTEM
- 110: OUTPUT TERMINAL OF ALPHA RESPONSE SYSTEM
- 220: INPUT TERMINAL THROUGH WHICH 1-BIT DIGITAL FB SIGNAL IS INPUT
- 230: INPUT TERMINAL THROUGH WHICH SLOPE COEFFICIENT SET VALUE IS INPUT
- 231: BIT EXTENDER
- 232: LOGIC UNIT
- 233: ADDER/SUBTRACTOR (OF INTEGRATING CIRCUIT)
- 234: LIMITER (OF INTEGRATING CIRCUIT)
- 235: HOLDER (OF INTEGRATING CIRCUIT)
- 240: OUTPUT TERMINAL OF WAVEFORM GENERATOR

## Claims

1. An image processing system comprising:
an input unit configured to input a switching signal for switching a main image and a sub-image;
a first comparator configured to compare the switching signal with a first reference potential and output a result of the comparison;
a second comparator configured to compare the switching signal with a second reference potential and output a result of the comparison;
a first waveform generator configured to output a digital rising or falling waveform based on the output of the first comparator;
a second waveform generator configured to output a digital rising or falling waveform based on the output of the second comparator; and
an averaging unit configured to output an average value of the outputs of the first and second waveform generators.

2. The image processing system of claim 1, further comprising:
a first and a second slope coefficient setting unit configured to set slopes of the rising and falling waveforms of the first and second waveform generators, respectively.

3. The image processing system of claim 1 or 2, further comprising:
a first and a second reference potential generator configured to set values of the first and second reference potentials, respectively.

4. An image processing system comprising:
an input unit configured to input a switching signal for switching a main image and a sub-image;
a comparator configured to compare the switching signal with a reference potential and output a result of the comparison;
a waveform generator configured to output a digital rising or falling waveform based on the output of the comparator; and
a slope coefficient setting unit configured to set slopes of the rising and falling waveforms of the waveform generator.

5. The image processing system of claim 4, further comprising:
a reference potential generator configured to set a value of the reference potential.
